# EUROPEAN PATENT SPECIFICATION

(11) **EP 3 313 601 B1**
(45) Date of publication and mention of the grant of the patent: **15.01.2020**
(21) Application number: 16813792.5
(22) Date of filing: 22.06.2016
(51) Int. Cl.: B23D 45/12, B23D 21/00, B23D 33/02, B25H 1/00, B23Q 3/06, B25B 5/04, B25B 5/10, B25B 5/14, B23K 9/00, B24B 27/00, B24B 19/00, B24B 23/08, B26D 3/16, B23D 21/04

(54) **APPARATUS FOR MANIPULATING TUBULAR AND ROUND SECTION OBJECTS**
VORRICHTUNG ZUR MANIPULATION VON OBJEKTEN MIT ROHRFÖRMIGEM UND RUNDEM QUERSCHNITT
APPAREIL DE MANIPULATION D'OBJETS AYANT UNE SECTION TUBULAIRE ET RONDE

(30) Priority: 23.06.2015 FI 20155488
(43) Date of publication of application: 02.05.2018
(73) Proprietor: Exact Tools Oy, 00210 Helsinki (FI)
(72) Inventor: MAKKONEN, Seppo, 00250 Helsinki (FI); PRIHA, Mika, 00180 Helsinki (FI)
(74) Representative: Berggren Oy, Helsinki & Oulu
(86) International application number: PCT/FI2016/050456
(87) International publication number: WO 2016/207489

(56) References cited:
- DE-U1-202007 015 155
- JP-A- S6 165 718
- JP-A- S62 157 714
- US-A1- 2011 062 126
- US-B2- 7 257 895

## Description

### TECHNICAL FIELD OF THE INVENTION

The invention relates to an apparatus for manipulating, such as machining and especially cutting tubular and round-bar type objects, as per the preamble of claim 1. Such an apparatus is known from US 7,257,895 B2.

### BACKGROUND OF THE INVENTION

A variety of tools are known from the prior art for machining, such as for cutting a tubular or round-bar type piece. One exemplary tool of the prior art is an apparatus comprising a clamping mechanism adapted to be fastened to the workpiece rotatably there around. The clamping mechanism has attached thereto a tool unit, which is provided with adjustment means for displacing said tool unit relative to the clamping mechanism towards or away from the workpiece. The clamping mechanism included a frame element and first and second arms extending therefrom, the arms being articulated at one end to the frame element of the clamping mechanism and each arm has its free end fitted with a bearing axle, which is provided with at least one bearing wheel. The clamping mechanism has its frame element provided in a rotatable and axially immobile fashion with a threaded shaft, whose first end has a right-handed thread provided with a first nut and whose second end has a left-handed thread provided with a second nut. The threaded shaft is provided with a member for rotating the threaded shaft, and the first arm and the first nut are articulated to each other by means of a first suspension arm and the second arm and the second nut are articulated to each other by means of a second suspension arm.

This apparatus has functioned excellently. However there might be situations, where there is need for more rigid and durable structure, such as for example when large diameter objects are manipulated, where the cutting forces are high. In addition sometimes there is need to fasten or tighten the clamping mechanism around the workpiece with different force, or faster or slower.

### SUMMARY OF THE INVENTION

An object of the invention is to alleviate and eliminate the problems relating to the known prior art. Especially the object of the invention is to provide an apparatus, which can be used more easily and more safety.

The object of the invention can be achieved by the features of independent claims 1 and 15.

The invention relates to an apparatus according to claim 1. In addition the invention relates to a manufacturing method according to claim 15.

The invention relates to an apparatus for manipulating workpieces, especially machining and cutting tubular and round-bar type pieces.

The apparatus comprises a clamping mechanism, which is adapted to be fastened to the workpiece rotatably therearound. The clamping mechanism is attached thereto a tool unit, which is provided with adjustment means for displacing said tool unit relative to the clamping mechanism towards or away from the workpiece. It is to be noted that the clamping mechanism can also be disconnected from the tool unit. The clamping mechanism comprises also a frame element and first and second arms extending therefrom. The arms are coupled or articulated at one end to the frame element of the clamping mechanism. In addition each arm has its free end fitted with a contacting member, such as a bearing axle which is provided with at least one bearing wheel. The contacting member is advantageously adjustable and is configured to contact the surface of the workpiece. By virtue of its adjustability, the apparatus can be fastened around a pipe to be cut in an optimal fashion regardless of the size of the pipe.

In addition, the apparatus comprises two movable guiding members to which said arms are coupled so that when said guiding members are moved away from each other, the contacting member of the arms are configured to be moved away from each other and vice versa. The apparatus comprises also at least two supporting bars elongated through said guiding members thereby supporting said guiding members. As an example there are holes or other coupling or hanging portions in the guiding members through or via which the two supporting bars are elongated.

Furthermore, the first supporting bar comprises a first threaded portion, and the first threaded portion comprises a first coupling means. In addition similarly the second supporting bar comprises a second threaded portion, and the second threaded portion comprises a second coupling means. The coupling means may be implemented e.g. by nuts or the like, which are for coupling the first and second arms functionally to the first and second supporting bars, or to the threaded portions respectively so that when the supporting bars and thereby the threaded portions are rotated, the nuts will move along the threaded portions as described in this document. It is to be noted that the first arm and the first coupling means, as well as the second arm and the second coupling means are functionally coupled to each other by a first and second suspension arms either directly or via the guiding members respectively.

Said at least two supporting bars are configured to be rotated at the same time e.g. by a common member, such as a rotatable knob, the rotation of which is configured to cause the simultaneous rotation of the supporting bars. The common member is advantageously coupled with the supporting bars via one or more gearwheels, whereupon the fastening or tightening of the clamping mechanism around the workpiece can be fastened by choosing high transmission ratio of the gearwheels, or fastening or tightening force can be increased by choosing low transmission ratio of the gearwheels, so i.e. by changing the size or gearing of the gearwheels.

The apparatus may additionally comprise auxiliary devices to facilitate the operation of the apparatus, such as a locking device for locking the moving of the guiding members or for locking the rotation of at least one supporting bar and thereby the moving of the guiding members to a certain position, most advantageously to a clamping or gripping position so that the clamping mechanism stays tightened around the workpiece to be manipulated. The locking device can be implemented e.g. by a latch or hook or pin, which can be introduced e.g. between the teeth of the gearwheels and thereby to lock their rotation.

In addition the apparatus may comprise a locking member which allows the apparatus to be locked in the manipulating position in a releasable manner. This makes the manipulating operation much easier, because the user has not to press the apparatus against the workpiece during the machining process. The locking from the machining position can be easily released when needed.

In one particularly preferred embodiment of the invention, the apparatus is such that the contacting member is implemented by the bearing axles and that at least one of the bearing wheels of the bearing axles is adapted to rotate in one direction only. This embodiment enables preventing a relative rotation of the tool unit and/or the pipe or other workpiece in a wrong direction, which would result in exceptional working forces that could develop flexures, which in turn would have an adverse effect on the resulting cut surface.

According to an example the tool unit comprises preferably a circular saw, a bandsaw, or a piercing saw. Also a bevelling saw for machining a bevel with a certain angle, e.g. 30° angle, at the end of the pipe can be used. Additionally the rotation speed of the tool unit is advantageously adjustable depending e.g. on material of the workpiece in question, whereupon the tool unit, saw or blade can be saved for damages. It is to be noted that the tool unit is not limited to those examples only but may also comprise other types of saws or machining means.

The present invention offers advantages over the known prior art, such as it simplifies and facilitates the manipulating procedure, but in addition the structure of the apparatus according to the invention is very rigid and durable due to the multiple supporting bars. According to a preferred embodiment, the gripping force, as well as the operation speed of the clamping mechanism can be optimized easily by changing the transmission (gear) ratio of the gearwheels of the supporting bars or the common member. It is to be noted that the gearwheels can be implemented by a module, whereupon the desired transmission (gear) ratio can be easily and quickly changed by different gearwheel module.

In addition the manufacturing process is very easy namely the supporting bars can be manufactured easily from a standard threaded rod. Also very large apparatuses can be manufactured by utilizing long threaded rods as the supporting bars. Furthermore the locking of the apparatus into the desired clamping position is very straightforward, easy, reliable and fast by a preferred locking device for locking the moving of the guiding members or for locking the rotation of at least one supporting bar.

Still in addition, due to locking member for locking the apparatus in a machining position the user does not need to focus to press the apparatus, such as keeping the blade as pressed during the operation due to locking, but he can concentrate to feeding process, such as feeding velocity, which is a clear advantage. In addition also the risks related to concentration of two different tasks are minimized, such as pressing and feeding operations. When the user can concentrate to the feeding velocity and feeding force, it is very advantage for the blade life time, since the smoother the feeding velocity and feeding force, the longer the life time of the blade. Furthermore embodiments of the invention allow also the operation of the apparatus and locking operations with one hand, whereupon the user is free to use the other hand for other possible tasks.

### BRIEF DESCRIPTION OF THE DRAWINGS

Next the invention will be described in greater detail with reference to exemplary embodiments in accordance with the accompanying drawings, in which:
- Figures 1A-1F: illustrate an example of an apparatus according to an advantageous embodiment of the invention,
- Figures 2A-2B: illustrate an example of an clamping mechanism of the apparatus according to an advantageous embodiment of the invention, and
- Figures 2C-2D: illustrate examples of gearwheels for rotating the supporting bars of an apparatus according to an advantageous embodiment of the invention.

### DETAILED DESCRIPTION

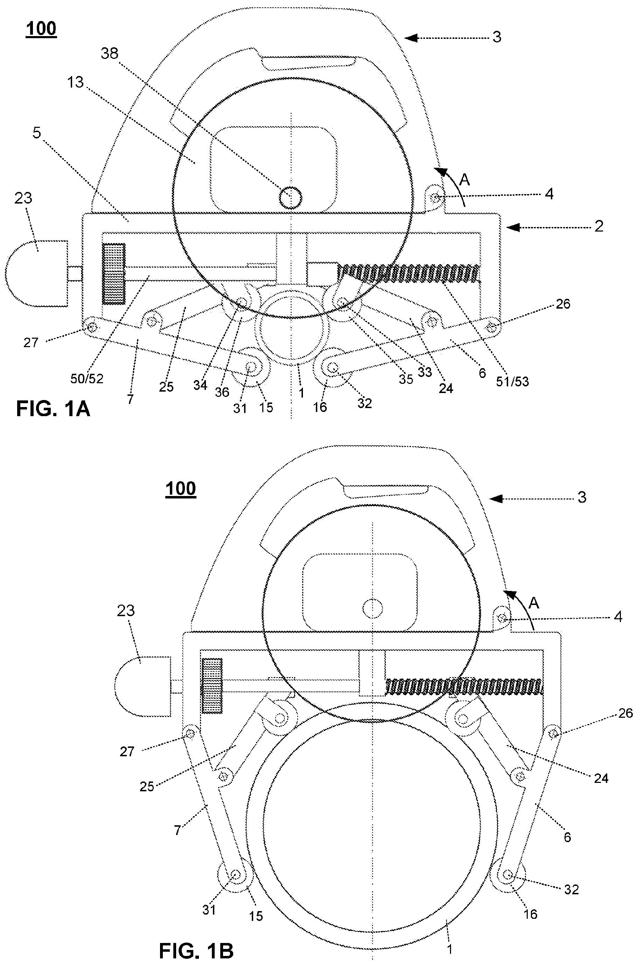

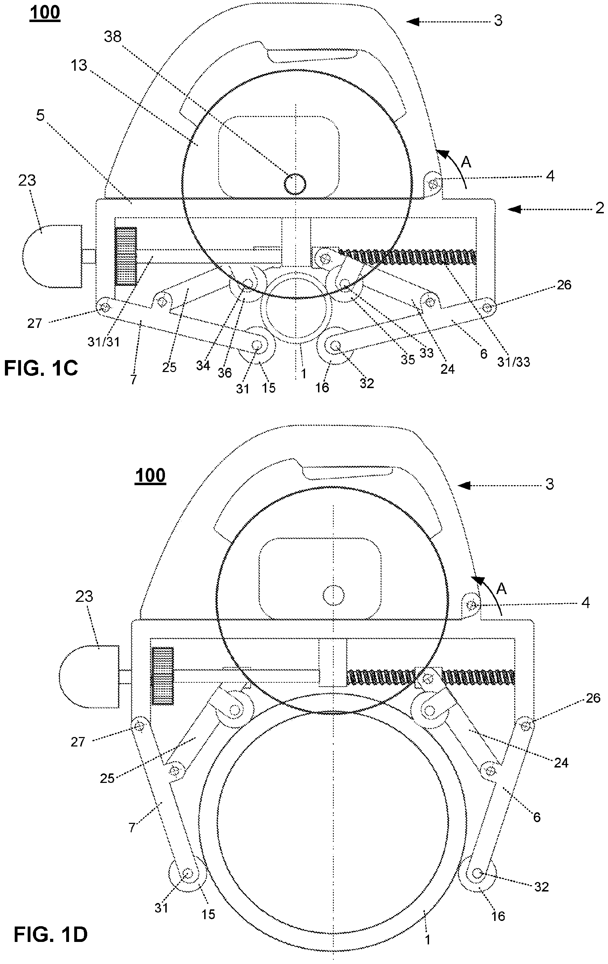

Figures 1A-1F illustrate example embodiment of an apparatus 100 according to an advantageous embodiment of the invention for working tubular or round-bar type pieces, such as for cutting a pipe 1. A tool unit 3 of the apparatus comprises advantageously a machining blade 13, such as a circular saw. In the examples the apparatus is designed as a hand tool.

The apparatus comprises a clamping mechanism 2, which is adapted to be fastened or grip to the pipe 1 to be machined rotatably therearound. Rotation occurs in such a way that the apparatus essentially retains its position in the axial direction of the pipe. The clamping mechanism or apparatus comprises contacting members, which is advantageously implemented by wheels 15, 16, 35, 36 (or any other similarly functioning supporting means, like a slide), which are advantageously mounted with bearings in such a way that, when pressed against the pipe's 1 external surface, the clamping mechanism 2 can be rotated in a plane essentially perpendicular to the centre axis of the pipe 1 or, respectively, the pipe 1 can be rotated relative to the clamping mechanism 2.

The clamping mechanism 2 is fitted with a tool unit 3, which in the illustrated example comprises a circular saw pivotably mounted by way of an axle 4 to the clamping mechanism 2 for displacing the saw 3 relative to the clamping mechanism 2 towards or away from the pipe 1 (an arrow A, Fig. 1A). The saw 3 has its blade 13 adapted advantageously to operate from outside a common rolling path of the wheels 15, 16, 35, 36. The axle 4 is advantageously parallel to the axis of rotation 38 of the blade.

The clamping mechanism 2 comprises a frame element 5, and first and second arms 6, 7 extending therefrom, said arms being articulated at one end thereof to the frame element 5 of the clamping mechanism 2 and the free end of each arm 6, 7. The arms 6, 7 are according to an embodiment fitted with a bearing axle 31, 32, on which is mounted at least one bearing wheel 15, 16.

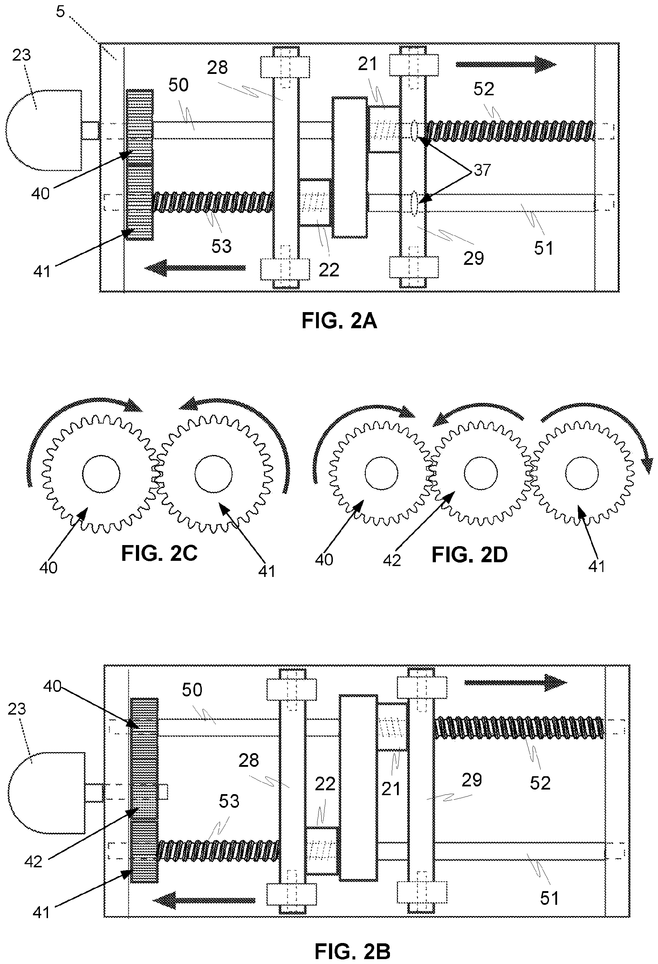

The apparatus 100 comprises also two movable guiding members 28, 29 (especially seen in Fig 2A, 2B) to which said arms 6, 7 are coupled so that when said guiding members 28, 29 are moved away from each other, the contacting member, or the wheels and the bearing axles 15, 16, 31, 32 of the arms 6, 7 are configured to be moved away from each other and vice versa, as can be seen in Fig 1A-1F. The apparatus comprises also at least two supporting bars 50, 51 elongated through said guiding members 28, 29 thereby supporting said guiding members. There are advantageously holes 37 or other coupling or hanging portions in the guiding members through or via which the two supporting bars are elongated.

Furthermore, the first supporting bar 50 comprises a first threaded portion 52, and the first threaded portion 52 comprises a first coupling means 21. In addition similarly the second supporting bar 51 comprises a second threaded portion 53, and the second threaded portion comprises a second coupling means 22. The coupling means 21, 22 may be implemented e.g. by nuts or the like, which are for coupling the supporting bars functionally to the first and second arms 6, 7 respectively so that when the threaded portions 52, 53 are rotated the coupling means 21, 22 move along the threaded portions and thereby move the arms 6, 7 respectively. It is to be noted that according to an advantageous embodiment the first arm 6 and the first coupling means 21, as well as the second arm 7 and the second coupling means 22 are functionally coupled to each other by a first and second suspension arms 24, 25 either directly or via the guiding members 28, 29 respectively.

Said at least two supporting bars 50, 51 are configured to be rotated at the same time e.g. by a common member 23, such as a rotatable knob, the rotation of which is configured to cause the simultaneous rotation of the supporting bars and thereby the moving of coupling means 21, 22 and again the moving of the arms 6, 7. The common member is advantageously coupled with the supporting bars via one or more gearwheels 40, 41, 42.

It is to be noted, that according to an embodiment the clamping mechanism 2 has its frame element 5 fitted rotatably and axially immovably with the supporting bars 50, 51 with the threaded portions 52, 53.

As can be seen in Fig 2A and 2B the end of the first supporting bar 50 comprises a first gearwheel 40, and end of the second supporting bar 51 comprises a second gearwheel 41. The first and second gearwheels are functionally coupled with each other so that when the first gearwheel 40 is rotated, the second gearwheel 41 rotates via said functional coupling.

According to an example shown in Fig 2A the common member 23 is coupled with the first supporting bar 50. Thus the rotation of the common member 23 rotates the first supporting bar 50 and the first gearwheel 40. Further the rotation of the first gearwheel 40 causes the rotation of the second gearwheel 41 and thereby the rotation of the second supporting bar 51. In this embodiment both of the first threaded portion 52 and second threaded portion 53 comprises a same handed thread, because due to contact of the first and second gearwheels, the first and second supporting bars 50, 51 rotate in different directions, as can be seen in Fig 2C depicting the gearwheel coupling. Due to the same handed threaded portions the movement of the coupling means 21, 22 and thus the moving of the arms 6, 7 can be achieved as desired, so that they either move away from each other or against each other when the supporting bars are rotated.

According to an example shown in Fig 2B the common member 23 comprises a third gearwheel 42, which is functionally coupled with the first and second gearwheels 40, 41 of the first and second supporting bars 50, 51, and arranged advantageously physically between the first and second gearwheels. The rotation of the common member 23 causes the rotation of the third gearwheel 42, which again causes the rotation of the first and second gearwheels 40, 41 and thereby the rotation of the supporting bars 50, 51. In this embodiment the first threaded portion 52 comprises a right handed thread and the second threaded portion 53 comprises a left handed thread (or vice versa), because due to contact of the first and second gearwheels with the third gearwheel, the first and second supporting bars 50, 51 rotate in same directions, as can be seen in Fig 2D depicting the gearwheel coupling. Due to the opposite handed threaded portions the movement of the coupling means 21, 22 and thus the moving of the arms 6, 7 can be achieved as desired, so that they either move away from each other or against each other when the supporting bars are rotated.

The member 23 may be for example a turning knob, as illustrated, but also other implementation can be applied, such as electric motor. For speeding up an opening and closing action effected by means of the turning knob 23, the apparatus may have the gear system with specific gear ratios for a highspeed movement or low-speed movement with higher force and thus an actual engagement. It is to be noted that the gear system may comprise gearwheels with different toothing and with specific gear ratios for different purposes, such as high or slow speed movements or for situations where increased forces are needed for the actual engagement. The gear ratio can be changed for example by selecting different sizes third gearwheel 42, and/or first and second gearwheels 40, 41. According to an embodiment the apparatus may comprise gearwheels as a changeable module, whereupon the suitable gear ratios for different purposes can be easily selected by changing suitable gearwheel module of certain gearwheels and with certain gear ratio.

As an example both of the guiding members 28, 29 comprise advantageously two holes 37, one for each of the supporting bars 50, 51 so that each of said supporting bars elongate through one hole of both guiding members 28, 29 so to provide supporting for said guiding members 28, 29. According to an example the first arm 6 and the first coupling means 21 are articulated to each other by means of a first suspension arm 24. Respectively, the second arm 7 and the second coupling means 22 are articulated to each other by means of a second suspension arm 25. According to an example the second bearing axles 33, 34 are coupled with said suspension arms 24, 25.

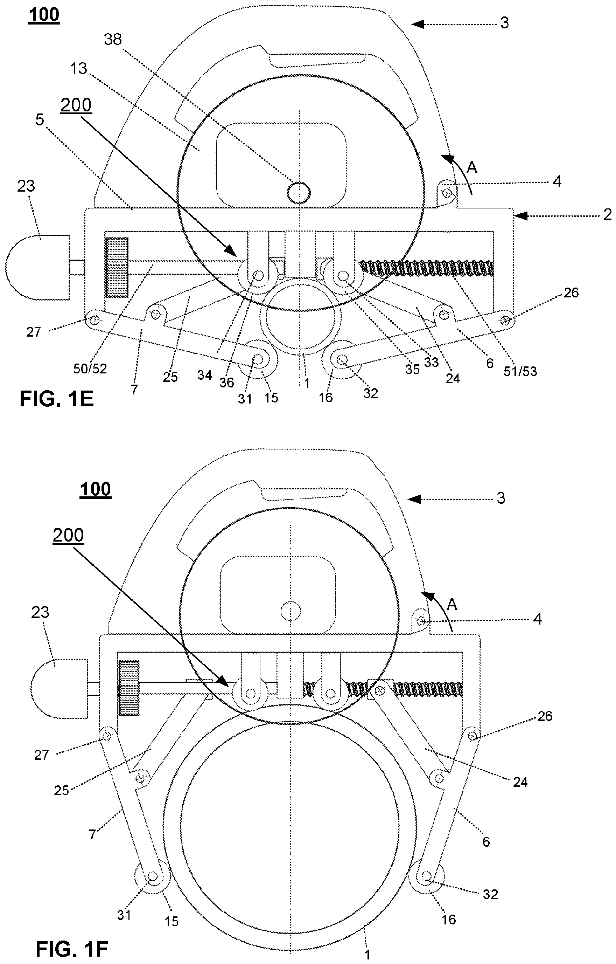

According to an embodiment, the apparatus comprises two second bearing axles 33, 34, each of said axles being provided with at least one bearing wheel 35, 36. It is to be noted that the second bearing axles 33, 34 might be fitted adjustably (as is the case with Figures 1A-1D) so that their mutual distance between the arms 6, 7 and the frame element 5 can be changed, or alternatively according to an embodiment they are fixedly fitted to the frame element 5 (as is the case with Figures 1E, 1F). According to an embodiment each of said second bearing axles 33, 34 (when adjustable) is connected to one of the first and/or second coupling means 21, 22; or when they are fixedly fitted, the suspension arms 24, 25 are connected e.g. directly to one of the first and/or second coupling means 21, 22.

According to an example pivot axles 26, 27 between the arms 6, 7 and the clamping mechanism's 2 frame element 5 are parallel to the bearing axles 31, 32, 33, 34. Each bearing axle 31, 32, 33, 34 may carry one or more wheels 15, 16, 35, 36. In the illustrated example, the wheels 15, 16, 35, 36 are arranged pairwise.

According to an embodiment at least one 15 of the bearing wheels 15, 16, 35, 36 mounted on the bearing axles 31, 32, 33, 34 may be adapted to rotate in one direction only, by means of a per se known ratchet device (having e.g. a tongue member and a corresponding gearing, not shown). This enables a relative rotation of the apparatus and the workpiece 1 in one direction only. Thus, such a wheel enables preventing incorrect operation of the apparatus and deformation possibly caused by adverse cutting forces resulting therefrom and irregularities in the cut surface caused thereby.

In addition at least one 16 of the bearing wheels 15, 16, 35, 36 may be mounted via an axis on the apparatus in an eccentrically adjustable way so that the track of the apparatus when travelling along the surface of the workpiece to be machined is adjustable. By this one can ensure good quality and direct sawing and seam.

Still according to an embodiment at least one of the bearing wheels 15, 16, 35, 36 is configured to increase friction of the bearing wheel 15, 16, 35, 36 in the axial direction of the workpiece to be machined and thereby preventing sliding of the wheels and whole apparatus relative to the workpiece. As an example the width of the wheel can be extended and is advantageously at least 2 cm. Furthermore the material of bearing wheel is advantageously chosen so to increase the friction and is for example urethane or rubber.

The inventive apparatus operates according to an example as follows. The clamping mechanism 2, along with its saw 3, is laid on top of the pipe 1 at a desired cutting point and the clamping mechanism 2 is fastened thereon by means of the turning knob 23. Rotation of the turning knob 23 causes the coupling means (e.g. a nut) 21 and the coupling means (e.g. a nut) 22 to move either towards or away from each other, depending on the turning direction of the knob 23. Transmitted by the suspension arms 24, 25 and the arms 6, 7, the motion progresses also to the wheels 15, 16, 35, 36, which respectively move either closer to or further away from each other. By rotating the turning knob 23, the wheels 15, 16, 35, 36 can thus be brought to press at a desired force against the pipe's 1 external surface.

Once the clamping mechanism 2 has been fastened to the pipe 1, the saw 3 can be pivoted towards the pipe 1 relative to the axle 4 included in the frame element 5 of the clamping mechanism 2, whereby the saw's 3 blade penetrates through the pipe's 1 wall to its bottom position, and which is adjustable in a per se known manner. This is followed by circling the clamping mechanism 2, along with its saw 3, around the pipe 1 or, as generally considered more beneficial, the pipe 1 is rotated with the saw 3 remaining stationary until the pipe 1 breaks off.

Advantageously the tool unit 3 is arranged in relation to the frame element 5 so that in the machining conditions (i.e. at the moment when the blade is penetrating into the workpiece) the pressing force vector induced via a handgrip of said tool unit 3 intersects an area formed between the first bearing wheel pair 15, 16 or between the second bearing wheel pair 35, 36, most advantageously points towards a midpoint of said tubular or round-bar type piece to be machined. By this any distortion forces can be minimized and additionally usability and ergonomics can be increased.

The invention has been explained above with reference to the aforementioned embodiments, and several advantages of the invention have been demonstrated. It is clear that the invention is not only restricted to these embodiments, but comprises all possible embodiments within the scope of the following patent claims. Especially it is to be noted that the apparatus is suitable for manipulating, such as especially machining, cutting, bevelling, grooving, welding or otherwise manipulating the tubular and round-bar type pieces. In addition it is to be noted that the tool unit can also be mounted by the axle 4 to the clamping mechanism 2 in the other end of the apparatus, whereupon the path of the hand when pressing the apparatus might be advantageous in a certain embodiment.

## Claims

1. An apparatus (100) for manipulating, such as machining, and especially cutting tubular and round-bar type pieces (1), said apparatus comprising a clamping mechanism (2) adapted to be fastened to said workpiece (1) rotatably therearound and said clamping mechanism (2) configured to be attached thereto a tool unit (3), which is provided with adjustment means (4) for displacing said tool unit (3) relative to the clamping mechanism (2) towards or away from the workpiece (1), and said clamping mechanism (2) comprising a frame element (5) and first and second arms (6, 7) extending therefrom, said arms (6, 7) being coupled at one end to the frame element (5) of the clamping mechanism (2) and each arm (6, 7) has its free end fitted with a contacting member (15, 16, 31, 32) configured to contact the surface of the workpiece (1), whereby the apparatus comprises:
- a first movable guiding member (28, 29) to which said first arm (6, 7) is coupled, and a second movable guiding member (28, 29) to which said second arm (6, 7) is coupled, wherein said guiding members (28, 29) are configured, when moved away from each other, to move the first and second arms (6, 7) and thereby said contacting member (15, 16, 31, 32) coupled with the arms (6, 7) away from each other and vice versa,
**characterized in that** the apparatus comprises:
- at least two supporting bars (50, 51) elongated through said guiding members (28, 29), and
- the first supporting bar (50) comprising a first threaded portion (52), said first threaded portion (52) comprising a first coupling means (21), and the second supporting bar (51) comprising a second threaded portion (53), said second threaded portion comprising a second coupling means (22), where said first threaded portion is configured to move said first coupling means (21) along said first supporting bar (50) and said second threaded portion is configured to move said second coupling means (22) along said second supporting bar (53), when said first and second supporting bars (51, 53) are rotated,
where
- the first arm (6) and the first coupling means (21) are functionally coupled to each other by a first suspension arm (24), and the second arm (7) and the second coupling means (22) are functionally coupled to each other by a second suspension arm (25), and
- said at least two supporting bars are coupled to each other so to be rotated at the same time.

2. An apparatus of claim 1, wherein the apparatus comprises a common member (23), such as a rotatable knob, the rotation of which is configured to cause the simultaneous rotation of the supporting bars.

3. An apparatus of any of previous claims, wherein the contacting member comprises a bearing axle (31, 32), which is provided with at least one bearing wheel (15, 16).

4. An apparatus of any of previous claims, wherein the end of the first supporting bar (50) comprises a first gearwheel (40), and end of the second supporting bar (51) comprises a second gearwheel (42), where said first and second gearwheels are functionally coupled with each other so that when the first gearwheel (40) is rotated, the second gearwheel (42) is configured to rotate via said functional coupling.

5. An apparatus of claim 4, wherein the common member (23) is coupled with said first supporting bar (50), whereupon the rotation of said common member (23) is configured to rotate said first supporting bar (50) and said first gearwheel (40), and whereupon the rotation of said first gearwheel (40) is configured to cause the rotation of the second gearwheel (41) and thereby the second supporting bar (51).

6. An apparatus of claim 4, wherein the common member (23) comprises a third gearwheel (42), which is functionally coupled with said first and second gearwheels (40, 41) of said first and second supporting bars (50, 51) so that rotation of the common member (23) is configured to cause the rotation of the third gearwheel (42), and where said rotation of said third gearwheel (42) is configured to cause the rotation of said first and second gearwheels (40, 41) and thereby the rotation of said first and second supporting bars (50, 51).

7. An apparatus of claim 6, wherein said first threaded portion (52) comprises a right handed thread and said second threaded portion (53) comprises a left handed thread, and wherein said third gearwheel of the common member (23) is arranged between said first and second gearwheels.

8. An apparatus of any of previous claims, wherein said first arm (6) and the first coupling means (21), as well as said second arm (7) and the second coupling means (22) are functionally coupled to each other by a second suspension arm (25) either directly or via the guiding members (28, 29) respectively.

9. An apparatus of any of previous claims, wherein both of said guiding members (28, 29) comprise two holes, one for each of said supporting bars (50, 51) so that each of said supporting bars elongate through one hole of both guiding members (28, 29) so to provide supporting for said guiding members (28, 29).

10. An apparatus of any of previous claims, wherein the apparatus further comprises two second bearing axles (33, 34), each of said axles being provided with at least one bearing wheel (35, 36), wherein said two second bearing axles (33, 34) are either:
- fitted adjustably (100) relative to their mutual distance between the arms (6,7) and the frame element (5), or
- fitted fixedly (200) to the frame element (5).

11. An apparatus of claim 10, wherein said second bearing axles (33, 34) are fitted between the arms (6, 7) adjacent to the frame element (5), such that the working force produced by a blade (13) of the tool unit (3) applies to the workpiece (1) a force, in response to which the workpiece presses against the bearing wheels (35, 36) mounted on said second bearing axles (33, 34).

12. An apparatus of any of previous claims 3-11, wherein at least one (16) of bearing wheels (15, 16, 35, 36) is mounted on the apparatus in an eccentrically adjustable way so that the track of the apparatus when travelling along the surface of the workpiece to be machined is adjustable.

13. An apparatus of any of previous claims, wherein the apparatus comprises a locking device for locking the moving of the guiding members or for locking the rotation of at least one supporting bar and thereby the moving of the guiding members.

14. An apparatus of any of previous claims, wherein the tool unit (3) comprises a circular saw, a bandsaw, a piercing saw or a bevelling saw and wherein the rotation speed of the tool unit is adjustable.

15. A method of manufacturing an apparatus of any of previous claims, wherein the method comprises:
- providing two movable guiding members (28, 29) and coupling the arms (6, 7) to said guiding members so that when said guiding members (28, 29) are moved away from each other, the contacting member (15, 16, 31, 32) of the arms (6, 7) moves away from each other and vice versa,
- providing at least two supporting bars (50, 51) elongating through said guiding members (28, 29), where the first supporting bar (50) comprises a first threaded portion (52), said first threaded portion (52) comprises a first coupling means (21), and the second supporting bar (51) comprises a second threaded portion (53), said second threaded portion comprises a second coupling means (22),
- functionally coupling the first arm (6) and the first coupling means (21) to each other by a first suspension arm (24), and functionally coupling the second arm (7) and the second coupling means (22) to each other by a second suspension arm (25), and
- configuring said at least two supporting bars to be rotated at the same time.

## Patentansprüche

1. Vorrichtung (100) zum Manipulieren, wie etwa Bearbeiten, und insbesondere Schneiden von rohrförmigen und rundstangenartigen Werkstücken (1), wobei die Vorrichtung einen Klemmmechanismus (2) umfasst, der ausgelegt ist, damit das Werkstück (1) drehbar um diesen herum befestigt werden kann, und der Klemmmechanismus (2) ausgestaltet ist, um an eine Werkzeugeinheit (3) angebracht zu sein, der mit Justiermitteln (4) zum Anordnen der Werkzeugeinheit (3) bezüglich des Klemmmechanismus (2) zu dem Werkstück (1) hin oder von diesem weg versehen ist, und wobei der Klemmmechanismus (2) ein Rahmenelement (5) und einen ersten und einen zweiten Arm (6, 7), die sich von diesem erstrecken, umfasst, wobei die Arme (6, 7) an einem Ende mit dem Rahmenelement (5) des Klemmmechanismus (2) verbunden sind und jeder Arm (6, 7) ein freies Ende aufweist, das mit einem Kontaktelement (15, 16, 31, 32) montiert ist, das ausgestaltet ist, um die Oberfläche des Werkstücks (1) zu kontaktieren, wobei die Vorrichtung umfasst:
- ein erstes bewegliches Führungselement (28, 29), mit welchem der erste Arm (6, 7) verbunden ist, und ein zweites bewegliches Führungselement (28, 29), mit welchem der zweite Arm (6, 7) verbunden ist, wobei die Führungselemente (28, 29) ausgestaltet sind, um den ersten und den zweiten Arm (6, 7) und dadurch das Kontaktelement (15, 16, 31, 32), das mit den Armen (6, 7) verbunden ist, weg voneinander und umgekehrt zu bewegen, wenn sie voneinander weg bewegt werden,
**dadurch gekennzeichnet, dass** die Vorrichtung umfasst:
- mindestens zwei Tragestangen (50, 51), die länglich durch die Führungselemente (28, 29) verlaufen, und
- wobei die erste Tragestange (50) einen ersten Gewindeabschnitt (52) umfasst, wobei der erste Gewindeabschnitt (52) ein erstes Verbindungsmittel (21) umfasst, und die zweite Tragestange (51) einen zweiten Gewindeabschnitt (53) umfasst, wobei der zweite Gewindeabschnitt ein zweites Verbindungsmittel (22) umfasst, wobei der erste Gewindeabschnitt ausgestaltet ist, um das erste Verbindungsmittel (21) entlang der ersten Tragestange (50) zu bewegen, und der zweite Gewindeabschnitt ausgestaltet ist, um das zweite Verbindungsmittel (22) entlang der zweiten Tragestange (53) zu bewegen, wenn die erste und die zweite Tragestange (51, 53) gedreht werden,
wobei
- der erste Arm (6) und das erste Verbindungsmittel (21) durch einen ersten Aufhängungsarm (24) funktionsgerecht miteinander verbunden sind, und der zweite Arm (7) und das zweite Verbindungsmittel (22) durch einen zweiten Aufhängungsarm (25) funktionsgerecht miteinander verbunden sind, und
- die mindestens zwei Tragestangen derart miteinander verbunden sind, dass sie zur gleichen Zeit gedreht werden.

2. Vorrichtung nach Anspruch 1, wobei die Vorrichtung ein gebräuchliches Element (23) wie etwa einen drehbaren Knopf umfasst, dessen Drehung ausgestaltet ist, um die simultane Drehung der Tragestangen auszulösen.

3. Vorrichtung nach einem der vorhergehenden Ansprüche, wobei das Kontaktelement eine Tragachse (31, 32) umfasst, welche mit mindestens einem Radlager (15, 16) versehen ist.

4. Vorrichtung nach einem der vorhergehenden Ansprüche, wobei das Ende der ersten Tragestange (50) ein erstes Zahnrad (40) umfasst und das Ende der zweiten Tragestange (51) ein zweites Zahnrad (42) umfasst, wobei das erste und das zweite Zahnrad derart funktionsgerecht miteinander verbunden sind, dass, wenn das erste Zahnrad (40) gedreht wird, das zweite Zahnrad (42) ausgestaltet ist, um mittels der Funktionsverbindung zu drehen.

5. Vorrichtung nach Anspruch 4, wobei das gebräuchliche Element (23) mit der ersten Tragestange (50) verbunden ist, wodurch die Drehung des gebräuchlichen Elements (23) ausgestaltet ist, um die erste Tragestange (50) und das erste Zahnrad (40) zu drehen, und wodurch die Drehung des ersten Zahnrads (40) ausgestaltet ist, um die Drehung des zweiten Zahnrads (41) und dadurch der zweiten Tragestange (51) auszulösen.

6. Vorrichtung nach Anspruch 4, wobei das gebräuchliche Element (23) ein drittes Zahnrad (42) umfasst, welches funktionsgerecht mit dem ersten und dem zweiten Zahnrad (40, 41) der ersten und der zweiten Tragestange (50, 51) verbunden ist, so dass die Drehung des gebräuchlichen Elements (23) ausgestaltet ist, um die Drehung des dritten Zahnrads (42) auszulösen, und wobei die Drehung des dritten Zahnrads (42) ausgestaltet ist, um die Drehung des ersten und des zweiten Zahnrads (40, 41) und dadurch die Drehung der ersten und der zweiten Tragestange (50, 51) auszulösen.

7. Vorrichtung nach Anspruch 6, wobei der erste Gewindeabschnitt (52) ein Rechtsgewinde umfasst und der zweite Gewindeabschnitt (53) ein Linksgewinde umfasst, und wobei das dritte Zahnrad des gebräuchlichen Elements (23) zwischen dem ersten und dem zweiten Zahnrad angeordnet ist.

8. Vorrichtung nach einem der vorhergehenden Ansprüche, wobei der erste Arm (6) und das erste Verbindungsmittel (21) sowie der zweite Arm (7) und das zweite Verbindungsmittel (22) durch einen zweiten Aufhängungsarm (25) entweder direkt oder jeweils über die Führungselemente (28, 29) funktionsgerecht miteinander verbunden sind.

9. Vorrichtung nach einem der vorhergehenden Ansprüche, wobei beide Führungselemente (28, 29) zwei Löcher umfassen, eines für jede der Tragestangen (50, 51), so dass jede der Tragestangen derart länglich durch ein Loch beider Führungselemente (28, 29) verlaufen, dass eine Unterstützung für die Führungselemente (28, 29) bereitgestellt ist.

10. Vorrichtung nach einem der vorhergehenden Ansprüche, wobei die Vorrichtung ferner zwei zweite Tragachsen (33, 34) umfasst, wobei jede der Achsen mit mindestens einem Radlager (35, 36) versehen ist, wobei die zwei zweiten Tragachsen (33, 34) entweder
- in Bezug auf ihren Abstand voneinander zwischen den Armen (6, 7) und dem Rahmenelement (5) justierbar montiert (100) oder
- an dem Rahmenelement (5) fest (200) montiert sind.

11. Vorrichtung nach Anspruch 10, wobei die zweiten Tragachsen (33, 34) zwischen den Armen (6, 7) benachbart zum Rahmenelement (5) montiert sind, derart, dass die Arbeitskraft, die durch eine Schneide (13) der Werkzeugeinheit (3) erzeugt wird, eine Kraft auf das Werkstück (1) aufbringt, auf welche das Werkstück in Ansprechen gegen die Radlager (35, 36) drückt, die an den zweiten Trageachsen (33, 34) angebracht sind.

12. Vorrichtung nach einem der vorhergehenden Ansprüche 3-11, wobei mindestens eines (16) der Radlager (15, 16, 35, 36) an der Vorrichtung auf eine exzentrisch justierbare Weise angebracht ist, so dass die Spur der Vorrichtung justierbar ist, wenn sie entlang der Oberfläche des zu bearbeitenden Werkstücks fährt.

13. Vorrichtung nach einem der vorhergehenden Ansprüche, wobei die Vorrichtung eine Arretiereinrichtung zum Arretieren der Bewegung der Führungselemente oder zum Arretieren der Drehung mindestens einer Tragestange und dadurch der Bewegung der Führungselemente.

14. Vorrichtung nach einem der vorhergehenden Ansprüche, wobei die Werkzeugeinheit (3) eine Kreissäge, eine Bandsäge, eine Stichsäge oder eine Gehrungssäge umfasst und wobei die Drehzahl der Werkzeugeinheit justierbar ist.

15. Verfahren zum Herstellen einer Vorrichtung nach einem der vorhergehenden Ansprüche, wobei das Verfahren umfasst:
- Bereitstellen von zwei beweglichen Führungselementen (28, 29) und Verbunden der Arme (6, 7) mit den Führungselementen, so dass sich, wenn die Führungselemente (28, 29) voneinander weg bewegt werden, das Kontaktelement (15, 16, 31, 32) der Arme (6, 7) weg voneinander und umgekehrt bewegt,
**dadurch gekennzeichnet, dass** die Vorrichtung umfasst:
- Bereitstellen von mindestens zwei Tragestangen (50, 51), die länglich durch die Führungselemente (28, 29) verlaufen, wobei die erste Tragestange (50) einen ersten Gewindeabschnitt (52) umfasst, wobei der erste Gewindeabschnitt (52) ein erstes Verbindungsmittel (21) umfasst, und die zweite Tragestange (51) einen zweiten Gewindeabschnitt (53) umfasst, wobei der zweite Gewindeabschnitt ein zweites Verbindungsmittel (22) umfasst,
- funktionsgerechtes Verbinden des ersten Arms (6) und des ersten Verbindungsmittels (21) miteinander durch einen ersten Aufhängungsarm (24) und funktionsgerechtes Verbinden des zweiten Arms (7) und des zweiten Verbindungsmittels (22) miteinander durch einen zweiten Aufhängungsarm (25), und
- Ausgestalten der mindestens zwei Tragestangen, so dass sie zur gleichen Zeit gedreht werden.

## Revendications

1. Appareil (100) pour la manipulation, telle que l'usinage, et en particulier la coupe de pièces tubulaires de type barres rondes (1), ledit appareil comprenant un mécanisme de serrage (2) adapté pour être fixé à ladite pièce usinée (1) de façon rotative autour de celle-ci, et ledit mécanisme de serrage (2) étant configuré pour être fixé à une unité d'outil (3) pourvue de moyens de réglage (4) pour déplacer ladite unité d'outil (3) par rapport au mécanisme de serrage (2) vers et à distance de la pièce usinée (1), et ledit mécanisme de serrage (2) comprenant un élément de châssis (5) et des premier et deuxième bras (6, 7) s'étendant à partir de celui-ci, lesdits bras (6, 7) étant accouplés à une extrémité de l'élément de châssis (5) du mécanisme de serrage (2) et chaque bras (6, 7) a son extrémité libre pourvue d'un élément de contact (15, 16, 31, 32) configuré pour toucher la surface de la pièce usinée (1), l'appareil comprenant :
- un premier élément de guidage mobile (28, 29) auquel ledit premier bras (6, 7) est accouplé, et un deuxième élément de guidage mobile (28, 29) auquel ledit deuxième bras (6, 7) est accouplé, dans lequel lesdits éléments de guidage (28, 29), lorsqu'ils sont déplacés à distance l'un de l'autre, sont configurés pour déplacer les premier et deuxième bras (6, 7) et par conséquent ledit élément de contact (15, 16, 31, 32) accouplé aux bras (6, 7) à distance les uns des autres et vice versa,
**caractérisé en ce que** l'appareil comprend :
- au moins deux barres de support (50, 51) s'étendant à travers lesdits éléments de guidage (28, 29), et
- la première barre de support (50) comprenant une première partie filetée (52), ladite première partie filetée (52) comprenant un premier moyen d'accouplement (21), et la deuxième barre de support (51) comprenant une deuxième partie filetée (53), ladite deuxième partie filetée comprenant un deuxième moyen d'accouplement (22), ladite première partie filetée étant configurée pour déplacer ledit premier moyen d'accouplement (21) le long de ladite première barre de support (50) et ladite deuxième partie filetée étant configurée pour déplacer ledit deuxième moyen d'accouplement (22) le long de ladite deuxième barre de support (53), lorsque lesdites première et deuxième barres de support (51, 53) sont en rotation,
où
- le premier bras (6) et le premier moyen d'accouplement (21) sont accouplés fonctionnellement l'un à l'autre par un premier bras de suspension (24), et le deuxième bras (7) et le deuxième moyen d'accouplement (22) sont accouplés fonctionnellement l'un à l'autre par un deuxième bras de suspension (25), et
- lesdites au moins deux barres de support sont accouplées l'une à l'autre de manière à tourner simultanément.

2. Appareil selon la revendication 1, dans lequel l'appareil comprend un élément commun (23), tel qu'un bouton rotatif, dont la rotation est configurée pour entraîner la rotation simultanée des barres de support.

3. Appareil selon l'une quelconque des revendications précédentes, dans lequel l'élément de contact comprend un axe de palier (31, 32) pourvu d'au moins une roue de support (15, 16).

4. Appareil selon l'une quelconque des revendications précédentes, dans lequel l'extrémité de la première barre de support (50) comprend une première roue dentée (40), et une extrémité de la deuxième barre de support (51) comprend une deuxième roue dentée (42), lesdites première et deuxième roues dentées sont accouplées fonctionnellement l'une à l'autre, de telle façon que lorsque la première roue dentée (40) est mise en rotation, la deuxième roue dentée (42) est configurée pour tourner par le biais de l'accouplement fonctionnel.

5. Appareil selon la revendication 4, dans lequel l'élément commun (23) est accouplé à ladite première barre de support (50), de sorte que la rotation dudit élément commun (23) est configurée pour faire tourner ladite première barre de support (50) et ladite première roue dentée (40), et de sorte que la rotation de ladite première roue dentée (40) est configurée pour entraîner la rotation de la deuxième roue dentée (41) et donc de la deuxième barre de support (51).

6. Appareil selon la revendication 4, dans lequel l'élément commun (23) comprend une troisième roue dentée (42) accouplée fonctionnellement auxdites première et deuxième roues dentées (40, 41) desdites première et deuxième barres de support (50, 51), de telle façon que la rotation de l'élément commun (23) est configurée pour entraîner la rotation de la troisième roue dentée (42), et ladite rotation de ladite troisième roue dentée (42) est configurée pour entraîner la rotation desdites première et deuxième roues dentées (40, 41) et par conséquent la rotation desdites première et deuxième barres de support (50, 51) .

7. Appareil selon la revendication 6, dans lequel ladite première partie filetée (52) comprend un filet à droite et ladite deuxième partie filetée (53) comprend un filet à droite, et dans lequel ladite troisième roue dentée de l'élément commun (23) est disposé entre lesdites première et deuxième roues dentées.

8. Appareil selon l'une quelconque des revendications précédentes, dans lequel ledit premier bras (6) et le premier moyen d'accouplement (21), ainsi que le deuxième bras (7) et le deuxième moyen d'accouplement (22), sont accouplés fonctionnellement l'un à l'autre par un deuxième bras de suspension (25), soit directement soit par le biais des éléments de guidage (28, 29) respectivement.

9. Appareil selon l'une quelconque des revendications précédentes, dans lequel les deux éléments de guidage (28, 29) comprennent deux trous, un pour chacune desdites barres de support (50, 51), de telle façon que chacune desdites barres de support s'étend à travers un trou des deux éléments de guidage (28, 29) de manière à fournir un support pour lesdits éléments de guidage (28, 29).

10. Appareil selon l'une quelconque des revendications précédentes, dans lequel l'appareil comprend en outre deux deuxièmes axes de palier (33, 34), chacun desdits axes étant doté d'au moins une roue de support (35, 36), dans lequel lesdits deuxièmes axes de palier (33, 34) sont soit :
- ajustés de façon réglable (100) par rapport à leur distance mutuelle entre les bras (6, 7) et l'élément de châssis (5), soit
- ajustés fixement (200) à l'élément de châssis (5).

11. Appareil selon la revendication 10, dans lequel lesdits deuxièmes axes de palier (33, 34) sont ajustés entre les bras (6, 7) à côté de l'élément de châssis (5), de telle façon que la force de travail produite par une lame (13) de l'unité d'outil (3) applique une force à la pièce usinée (1), en réponse à laquelle la pièce usinée est pressée contre les roues de support (35, 36) montées sur lesdits deuxièmes axes de palier (33, 34).

12. Appareil selon l'une quelconque des revendications 3 à 11, dans lequel l'une au moins (16) parmi les roues de support (15, 16, 35, 36) est montée sur l'appareil de façon réglable excentriquement, de telle manière que la voie de l'appareil est réglable lors de son déplacement le long de la surface de la pièce usinée à traiter.

13. Appareil selon l'une quelconque des revendications précédentes, dans lequel l'appareil comprend un dispositif de blocage destiné à bloquer le déplacement des éléments de guidage ou à bloquer la rotation de l'au moins une barre de support et par conséquent le déplacement des éléments de guidage.

14. Appareil selon l'une quelconque des revendications précédentes, dans lequel l'unité d'outil (3) comprend une scie circulaire, une scie à ruban, une scie à guichet ou une scie chanfreineuse et dans lequel la vitesse de rotation de l'unité d'outil est réglable.

15. Procédé pour la fabrication d'un appareil selon l'une quelconque des revendications précédentes, le procédé comprenant :
- la mise à disposition de deux éléments de guidage (28, 29) déplaçables et l'accouplement des bras (6, 7) auxdits éléments de guidage, de telle façon que lorsque lesdits éléments de guidage (28, 29) sont déplacés à distance l'un de l'autre, les éléments de contact (15, 16, 31, 32) des bras (6, 7) se déplacent à distance les uns des autres et vice versa,
- la mise à disposition d'au moins deux barres de support (50, 51) s'étendant à travers lesdits éléments de guidage (28, 29), la première barre de support (50) comprenant une première partie filetée (52), ladite première partie filetée (52) comprenant un premier moyen d'accouplement (21), et la deuxième barre de support (51) comprenant une deuxième partie filetée (53), ladite deuxième partie filetée comprenant un deuxième moyen d'accouplement (22),
- l'accouplement fonctionnel du premier bras (6) et du premier moyen d'accouplement (21) l'un à l'autre par un premier bras de suspension (24), et l'accouplement fonctionnel du deuxième bras (7) et du deuxième moyen d'accouplement (22) l'un à l'autre par un deuxième bras de suspension (25), et
- la configuration desdites au moins deux barres de support pour une mise en rotation simultanée.
